# EUROPEAN PATENT APPLICATION

(11) **EP 3 896 552 A1**
(43) Date of publication of application: **20.10.2021**
(21) Application number: 21168475.8
(22) Date of filing: 15.04.2021
(51) Int. Cl.: G06F 1/32, G06F 1/3234, G06F 1/3293, G06K 15/00, H04N 1/00

(54) **POWER-SAVING CONTROL APPARATUS , IMAGE PROCESSING APPARATUS, POWER-SAVING CONTROL METHOD, AND CARRIER MEANS**

(30) Priority: 17.04.2020 JP 2020074273
(71) Applicant: Ricoh Company, Ltd., Tokyo 143-8555 (JP)
(72) Inventor: TAKAHASHI, Ken, Tokyo, 143-8555 (JP)
(74) Representative: SSM Sandmair

(57) **Abstract**

A power-saving control apparatus (100) includes: a main system (120) to perform one or more processes; and a subsystem (110) communicable with the main system. The subsystem includes: a receiving unit (300, 301, 302) to receive, from the main system (120), one or more pieces of request information regarding the one or more processes via a serial bus interface; a responding unit (304) to create and return one or more pieces of response information corresponding to one or more pieces of predetermined request information among the received one or more pieces of request information; and a state control unit (306) to, when the main system (120) is in a power-saving state, cause the main system (120) to maintain the power-saving state in a case where the received request information is the predetermined request information. The power-saving state is a state in which power consumption is less than power consumption in a normal state in which the main system (120) is ready to perform the one or more processes.

## Description

### BACKGROUND

### Technical Field

The present disclosure relates to a power-saving control apparatus, an image processing apparatus, a power-saving control method, and carrier means.

### Description of the Related Art

There is an apparatus that performs a certain process and includes a subsystem having the minimum processing capability and the minimum memory size to accept an instruction regarding the process. When such an apparatus is not performing the process, the subsystem alone is caused to operate. In this manner, power consumption of the apparatus is reduced.

For example, there is a technique for an image processing apparatus including a main system and a subsystem. According to this technique, in response to the subsystem receiving data from a serial bus interface, the main system is caused to return from a power-saving state (for example, Japanese Unexamined Patent Application Publication No. 2016-170649). In this technique, the main system is caused to return from the power-saving state each time the subsystem receives data from the serial bus interface. Thus, the technique has a drawback in that power consumption increases if data is received from the serial bus interface in the power-saving state.

### SUMMARY

According to one embodiment of the present disclosure, a power-saving control apparatus includes a main system and a subsystem. The main system performs one or more processes. The subsystem communicable with the main system includes a receiving unit, a responding unit, and a state control unit. The receiving unit receives one or more pieces of request information regarding the one or more processes via a serial bus interface. The responding unit creates and returns one or more pieces of response information corresponding to one or more pieces of predetermined request information among the received one or more pieces of request information. The state control unit, when the main system is in a power-saving state, cause the main system to maintain the power-saving state in a case where the received request information is the predetermined request information. The power-saving state is a state in which power consumption is less than power consumption in a normal state in which the main system is ready to perform the one or more processes.

According to one embodiment of the present disclosure, a power-saving control method performed by a subsystem of a power-saving control apparatus is provided. The power-saving control apparatus includes a main system that performs one or more processes, and the subsystem communicable with the main system. The power-saving control method includes: receiving one or more pieces of request information regarding the one or more processes via a serial bus interface; creating and returning one or more pieces of response information corresponding to one or more pieces of predetermined request information among the one or more pieces of request information received in the receiving; and when the main system is in a power-saving state, causing the main system to maintain the power-saving state in a case where the received request information is the predetermined request information, the power-saving state being a state in which power consumption is less than power consumption in a normal state in which the main system is ready to perform the one or more processes.

According to one embodiment of the present disclosure, carrier means carrying computer readable code, such as a recording medium, for controlling a computer system to carry out the power-save control method is provided.

According to at least one embodiment of the present disclosure, a power-saving control apparatus in which a subsystem controls a power state of a main system successfully suppresses an increase in power consumption that occurs when data is received from a serial bus interface in the power-saving state.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating an example of a system configuration of a power-saving control apparatus according to one embodiment;
FIGs. 2A and 2B are schematic diagrams each illustrating a structure of a packet transmitted and received by the power-saving control apparatus according to the one embodiment;
FIG. 3 is a block diagram illustrating an example of a functional configuration of a power-saving control apparatus according to a first embodiment;
FIG. 4 is a schematic diagram illustrating Internet Printing Protocol-Universal Serial Bus (IPP-USB) communication according to the first embodiment;
FIG. 5 is a sequence diagram illustrating an example of a process performed in a normal state in accordance with the first embodiment;
FIG. 6 is a flowchart illustrating an example of a determining process performed in accordance with the first embodiment;
FIG. 7 is a sequence diagram illustrating examples of a transition process and a return process performed in accordance with the first embodiment;
FIG. 8 is a sequence diagram illustrating an example of a process performed in a power-saving state in accordance with the first embodiment;
FIG. 9 is a sequence diagram illustrating an example of the process performed in the power-saving state in accordance with the first embodiment;
FIG. 10 is a block diagram illustrating another example of the functional configuration of the power-saving control apparatus according to the first embodiment;
FIG. 11 is a block diagram illustrating an example of a functional configuration of a power-saving control apparatus according to a second embodiment;
FIG. 12 is a sequence diagram illustrating an example of a process performed in a normal state in accordance with the second embodiment;
FIG. 13 is a flowchart illustrating an example of a determining process performed in accordance with the second embodiment;
FIG. 14 is a sequence diagram illustrating an example of a process performed in a power-saving state in accordance with the second embodiment;
FIG. 15 is a sequence diagram illustrating an example of the process performed in the power-saving state in accordance with the second embodiment; and
FIG. 16 is a flowchart illustrating an example of a determining process performed in accordance with a third embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

The terminology used herein is for the purpose of describing particular embodiments only and is not intended to be limiting of the present invention. As used herein, the singular forms "a", "an," and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Embodiments of the present disclosure will be described in detail below with reference to the drawings.

### <System Configuration>

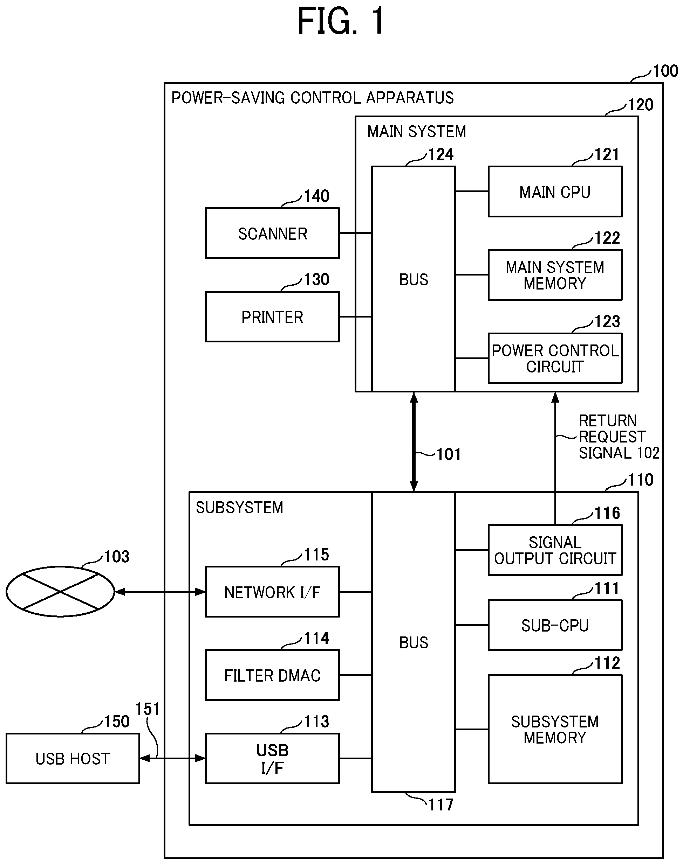

FIG. 1 is a block diagram illustrating an example of a system configuration of a power-saving control apparatus according to one embodiment. A power-saving control apparatus 100 is, for example, an apparatus that is coupled to a Universal Serial Bus (USB) host 150 such as a personal computer (PC) by a USB cable 151 and that performs a certain process in accordance with control performed by the USB host 150. The power-saving control apparatus 100 may be various apparatuses having a normal state in which the power-saving control apparatus 100 is ready to perform a certain process in accordance with control performed by the USB host 150 and a power-saving state in which power consumption is less than that in the normal state. In this embodiment, the following description is given on the assumption that the power-saving control apparatus 100 is an image processing apparatus that performs, as the certain process, an image forming process such as scanning, printing, or copying by way of example.

However, the power-saving control apparatus 100 is not limited to this and may be, for example, an output apparatus such as a projector (PJ), an interactive white board (IWB: white board capable of interactive communication and having an electronic white board function), or a digital signage. The power-saving control apparatus 100 may also be, for example, various apparatuses such as an industrial machine, an imaging apparatus, a sound-collecting apparatus, a medical apparatus, a network-connected appliance, a connected car, and a vehicle-mounted device.

As illustrated in FIG. 1, the power-saving control apparatus (image processing apparatus) 100 includes a subsystem 110 and a main system 120.

The subsystem 110 includes, for example, a sub-central processing unit (CPU) 111, a subsystem memory 112, a USB interface (I/F) 113, a filter direct memory access controller (DMAC) 114, a network I/F 115, a signal output circuit 116, and a bus 117.

The sub-CPU 111 is, for example, a processor (arithmetic unit) that executes a certain program stored in the subsystem memory 112 or the like to control the subsystem 110. The subsystem memory 112 includes, for example, a random access memory (RAM) used as a work area of the sub-CPU 111 and a read-only memory (ROM) in which a program for booting the sub-CPU 111 is pre-stored. The subsystem memory 112 may include, for example, a storage device such as a solid state drive (SSD).

The USB I/F 113 is a serial bus interface that couples the subsystem 110 to the USB host 150 to transmit and receive packet data. The network I/F 115 is an interface that connects the subsystem 110 to a network 103 to transmit and receive packet data via the network 103. The filter DMAC 114 has a filter function of performing filtering on packet data received by the USB I/F 113 or the network I/F 115 to discard unnecessary packet data, and a DMAC function.

The signal output circuit 116 is, for example, a circuit that outputs, to the main system 120, a signal such as a return request signal for requesting returning from the power-saving state in accordance with control performed by the sub-CPU 111. The bus 117 is coupled to the constituents of the subsystem 110 in common and transfers, for example, an address signal, a data signal, and various control signals.

The main system 120 includes, for example, a main CPU 121, a main system memory 122, a power control circuit 123, and a bus 124. The main system 120 controls, for example, a printer 130 or a scanner 140 to perform an image forming process (an example of the certain process).

The main CPU 121 is, for example, a processor (arithmetic unit) that executes a certain program stored in the main system memory 122 to control the main system 120. The main system memory 122 includes, for example, a RAM used as a work area of the main CPU 121, a ROM in which a program for booting the main CPU 121 is pre-stored, and a storage device.

The power control circuit 123 controls power supply to the constituents of the main system 120. For example, the main system 120 transitions to the power-saving state in response to a state without any user operation or any process execution request from the network 103, the USB host 150, or the like lasting for a certain period or more. At this time, the power control circuit 123 stops power supply to the constituents of the main system 120 except for the power control circuit 123 in accordance with control performed by the main CPU 121, for example. In response to receipt, from the subsystem 110, of a return request signal 102 for requesting returning to the normal state from the power-saving state, the power control circuit 123 resumes power supply to the constituents of the main system 120.

The bus 124 is coupled to the constituents of the main system 120 in common and transfers, for example, an address signal, a data signal, and various control signals.

The printer 130 includes, for example, a printer engine that performs printing, and a controller. The printer 130 performs a printing process in accordance with control performed by the main CPU 121. The scanner 140 includes, for example, a scanner engine that scans an original, and a controller. The scanner 140 performs a scanning process in accordance with control performed by the main CPU 121. The printer 130 and the scanner 140 may be included in the main system 120.

The subsystem 110 and the main system 120 have different power supply systems and are coupled to be able to communicate with each other via a communication channel 101 of Peripheral Component Interconnect (PCI) Express (registered trademark), for example. The communication channel 101 that couples the subsystem 110 and the main system 120 to enable communication therebetween may be a high-speed serial interface other than PCI Express or may be a communication interface other than a high-speed serial interface.

The power-saving control apparatus 100 has the normal state and the power-saving state. In the normal state, the main system 120 is ready to perform an image forming process (an example of the certain process). In the power-saving state, power supply to the constituents of the main system 120 is stopped, so that the main system 120 is unable to perform the image forming process. In the power-saving control apparatus 100, the subsystem 110 alone communicates with an external apparatus or the like in the power-saving state. In this manner, power consumption of the main system 120 that consumes more power is reduced. Therefore, the subsystem 110 desirably includes, for example, the sub-CPU 111 having the minimum processing capability for accepting an instruction regarding an image forming process from an external apparatus or the like, and the subsystem memory 112 having the minimum storage capacity.

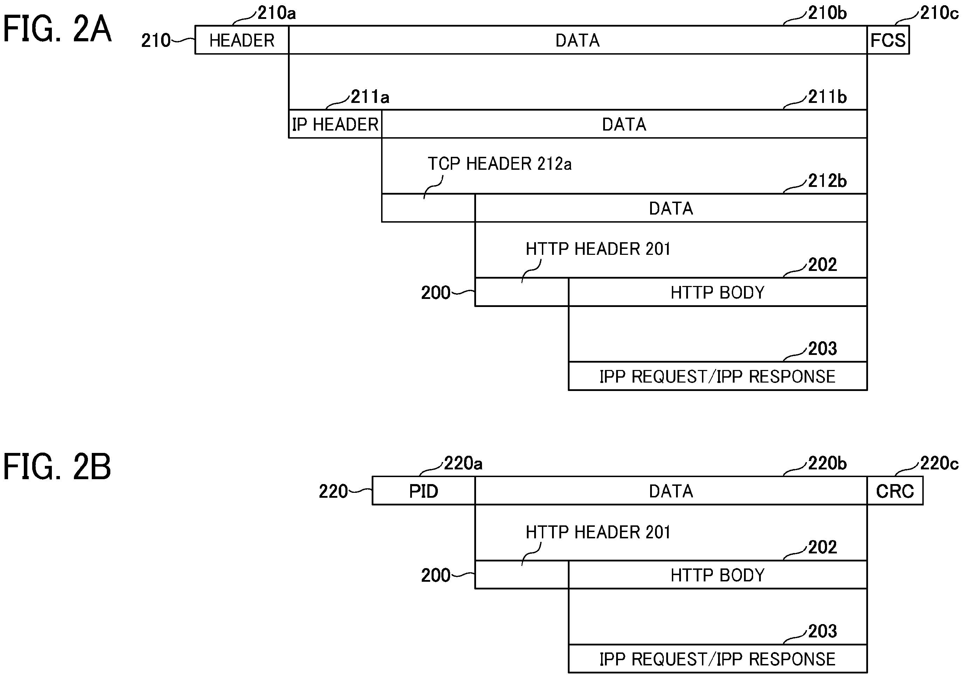

FIGs. 2A and 2B are schematic diagrams each illustrating a structure of a packet transmitted and received by the power-saving control apparatus according to the one embodiment. The power-saving control apparatus 100 according to the present embodiment uses the Internet Printing Protocol (IPP) to transmit and receive packet data via the network 103. The IPP is a protocol for transmitting and receiving commands (such as an information acquisition request) and data (such as print data) that relate to a printing process.

FIG. 2A schematically illustrates a structure of a packet transmitted and received by the network I/F 115. The network I/F 115 uses an ordinary Ethernet packet 210 to transmit and receive an IPP packet 200. As illustrated in FIG. 2A, the Ethernet packet 210 includes, for example, an Ethernet header 210a, data 210b, and a frame check sequence (FCS) 210c.

As illustrated in FIG. 2A, the data 210b includes an Internet Protocol (IP) header 211a and data 211b, for example. The data 211b includes a Transmission Control Protocol (TCP) header 212a and data 212b. The network I/F 115 transmits and receives this data 212b (payload) as the IPP packet 200. Therefore, to transmit and receive the IPP packet 200 using the network I/F 115, the power-saving control apparatus 100 includes a TCP/IP protocol stack for performing processing for the TCP/IP protocol.

FIG. 2B schematically illustrates a structure of a packet transmitted and received by the USB I/F 113. The USB I/F 113 uses a USB packet 220 to transmit and receive the IPP packet 200. Specifically, the USB I/F 113 transmits and receives the USB packet 220 conforming to the IPP over USB (hereinafter referred to as "IPP-USB") that is extension of the IPP to the USB interface. As illustrated in FIG. 2B, the USB packet 220 includes, for example, a packet identifier (PID) 220a, data 220b, and cyclic redundancy check (CRC) 220c. The USB I/F 113 transmits and receives this data 220b (payload) as the IPP packet 200.

The IPP packet 200 includes, for example, a Hypertext Transfer Protocol (HTTP) header 201 and an HTTP body 202. The HTTP body 202 stores an IPP request or IPP response 203.

Since the Ethernet packet 210 transmitted and received by the network I/F 115 includes various kinds of packets, the TCP/IP protocol stack that processes the Ethernet packet 210 consumes lots of CPU resources and memory. In contrast, in the USB packet 220 transmitted and received by the USB I/F 113, the PID 220a alone is added to the IPP packet 200. Thus, the CPU resources and memory used for interpretation of the data can be greatly reduced.

However, according to a technique of the related art, for example, the technique described in Japanese Unexamined Patent Application Publication No. 2016-170649, the main system is caused to return to the normal state from the power-saving state each time the subsystem receives data from the USB interface in the power-saving state. Thus, the technique has a drawback in that power consumption increases.

Accordingly, the subsystem 110 according to the present embodiment has a function of creating and returning response information corresponding to any of one or more pieces of request information among pieces of request information received by the subsystem 110 from the USB I/F 113 in the power-saving state. For example, the subsystem 110 is capable of responding to any of one or more predetermined IPP requests (such as a model name acquisition request, a state information acquisition request, and an option information acquisition request) among IPP requests (pieces of request information) received from the USB I/F 113. Note that an IPP request is an example of a printing service request regarding a printing process.

If an IPP request received by the USB I/F 113 in the power-saving state is any of the one or more IPP requests mentioned above, the subsystem 110 creates and returns an IPP response with the main system 120 kept in the power-saving state. Note that an IPP response is an example of a printing service response corresponding to a printing service request.

If an IPP request received by the USB I/F 113 in the power-saving state is not any of the one or more IPP requests mentioned above, the subsystem 110 causes the main system 120 to return to the normal state from the power-saving state.

Thus, in response to receipt of an IPP request to which the subsystem 110 is able to respond from the USB I/F 113 in the power-saving state, the subsystem 110 can return a response to the IPP request within a range of the subsystem 110 having relatively small power consumption.

In response to receipt of an IPP request (such as a printing process request, for example) to which the subsystem 110 is unable to respond, the subsystem 110 can cause the main system 120 to return from the power-saving state and perform the process.

Therefore, according to the present embodiment, the power-saving control apparatus 100 in which the subsystem 110 controls the power state of the main system 120 successfully suppresses an increase in power consumption that occurs when data is received from a serial bus interface in the power-saving state.

### [First Embodiment]

### <Functional Configuration>

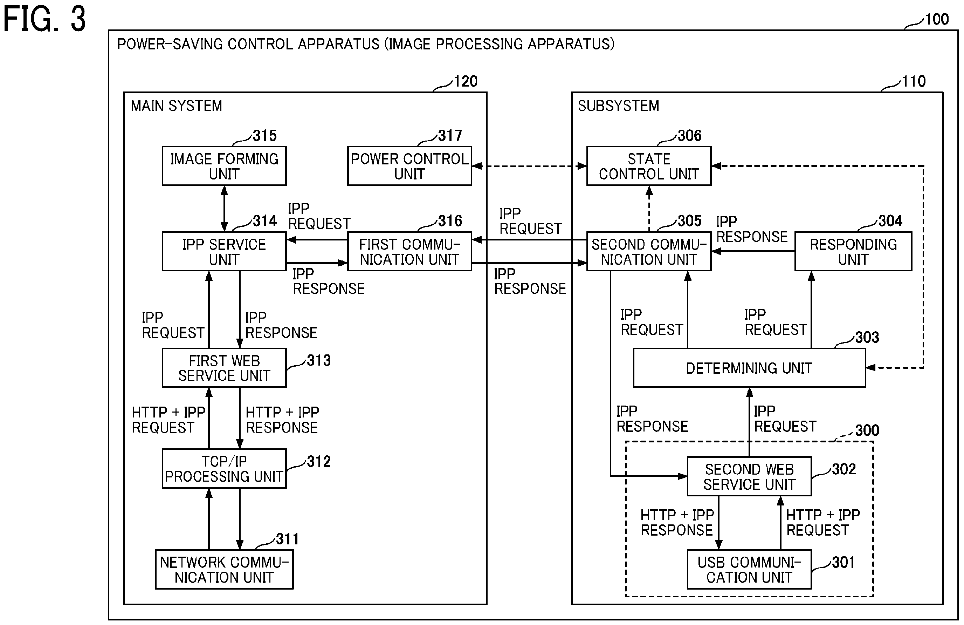

FIG. 3 is a block diagram illustrating an example of a functional configuration of a power-saving control apparatus according to a first embodiment. The power-saving control apparatus 100 includes the main system 120 that performs a certain process, and the subsystem 110 coupled to the main system 120 to be able to communicate with the main system 120.

### (Functional Configuration of Main System)

As a result of the main CPU 121 illustrated in FIG. 1 executing a certain program, the main system 120 functions as, for example, a network communication unit 311, a TCP/IP processing unit 312, a first web service unit 313, an IPP service unit 314, an image forming unit 315, a first communication unit 316, and a power control unit 317. At least part of the aforementioned functional configurations may be implemented by hardware.

The network communication unit 311 transmits and receives, for example, the Ethernet packet 210 illustrated in FIG. 2A, for example, via the network I/F 115 of the subsystem 110.

The TCP/IP processing unit 312 is implemented by, for example, the TCP/IP protocol stack executed by the main CPU 121 illustrated in FIG. 1. The TCP/IP processing unit 312 performs TCP/IP processing on the Ethernet packet 210 transmitted and received by the network communication unit 311. For example, the TCP/IP processing unit 312 extracts the HTTP header 201 and an IPP request (which are hereinafter referred to as an "HTTP + IPP request") from the Ethernet packet 210 received by the network communication unit 311 and notifies the first web service unit 313 of the extracted HTTP + IPP request.

The TCP/IP processing unit 312 accepts the HTTP header 201 and an IPP response (which are hereinafter referred to as an "HTTP + IPP response") from the first web service unit 313, adds the TCP header 212a and the IP header 211a to the HTTP + IPP response, and outputs the resultant packet to the network communication unit 311.

The first web service unit 313 performs HTTP processing on the Ethernet packet 210 transmitted and received by the network communication unit 311. For example, the first web service unit 313 extracts the IPP request from the "HTTP + IPP request" accepted from the TCP/IP processing unit 312 and notifies the IPP service unit 314 of the extracted IPP request.

The first web service unit 313 also adds the HTTP header 201 to the IPP response accepted from the IPP service unit 314, and notifies the TCP/IP processing unit 312 of the "HTTP + IPP response".

In accordance with the IPP request which the IPP service unit 314 is notified of by the subsystem 110 via the first web service unit 313 or the first communication unit 316, the IPP service unit 314 performs a requested process. For example, if the requested process indicated by the IPP request is a printing process, the IPP service unit 314 causes the image forming unit 315 to perform the printing process. The IPP service unit 314 creates an IPP response including the processing result, and notifies the requestor, namely, the first web service unit 313 or the subsystem 110 of the created IPP response.

In response to a request from the IPP service unit 314 or the like, the image forming unit 315 controls the printer 130, the scanner 140, or the like to perform an image forming process such as a printing process or a scanning process, for example.

The first communication unit 316 communicates with the subsystem 110 via the communication channel 101. For example, the first communication unit 316 receives an IPP request (an example of request information) transmitted from the subsystem 110 and transfers the IPP request to the IPP service unit 314. The first communication unit 316 also transmits, to the subsystem 110, an IPP response (an example of response information) which the first communication unit 316 is notified of by the IPP service unit 314.

In response to a previously set transition condition to the power-saving state being met, the power control unit 317 notifies the subsystem 110 of transition to the power-saving state. The subsystem 110 causes the main system 120 to transition to the power-saving state. For example, in response to an elapse of a certain time period from the last execution of a process or the last acceptance of an operation, the power control unit 317 sets the main system 120 in a shutdown or sleep state. The power control unit 317 also controls the power control circuit 123 illustrated in FIG. 1, so that the power control circuit 123 stops power supply to the constituents of the main system 120.

For example, in response to the return request signal 102 from the subsystem 110, the power control unit 317 controls the power control circuit 123, so that the power control circuit 123 resumes power supply to the constituents of the main system 120. In response to activation of the main system 120, the main system 120 transmits, to the subsystem 110, a transition notification to the normal state.

### (Functional Configuration of Subsystem)

As a result of the sub-CPU 111 illustrated in FIG. 1 executing a certain program, the subsystem 110 functions as, for example, a USB communication unit 301, a second web service unit 302, a determining unit 303, a responding unit 304, a second communication unit 305, and a state control unit 306. At least part of the aforementioned functional configurations may be implemented by hardware.

The USB communication unit 301 is implemented by, for example, a program such as a USB driver executed by the sub-CPU 111. The USB communication unit 301 uses the USB I/F 113 to transmit and receive the USB packet 220 illustrated in FIG. 2B to and from the USB host 150.

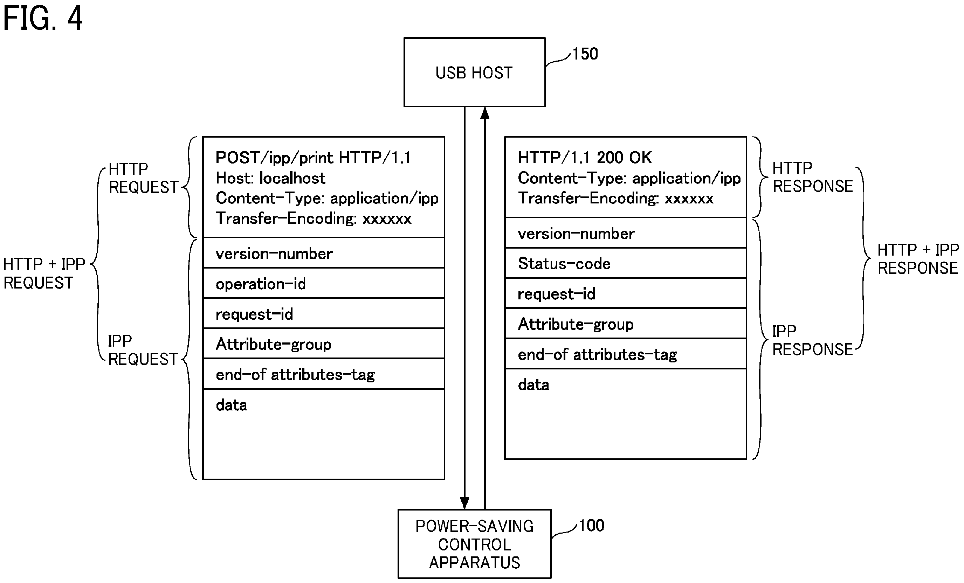

FIG. 4 is a schematic diagram illustrating IPP-USB communication according to the first embodiment. The USB host 150 transmits the USB packet 220 illustrated in FIG. 2B to the power-saving control apparatus 100 by, for example, bulk out transfer. As illustrated in FIG. 4, the USB packet 220 includes, for example, an "HTTP + IPP request" including an HTTP request and an IPP request. In response to receipt of the USB packet 220 transmitted from the USB host 150, the USB communication unit 301 notifies the second web service unit 302 of the "HTTP + IPP request" included in the received USB packet 220.

In response to acceptance of the "HTTP + IPP response" for example from the second web service unit 302, the USB communication unit 301 creates the USB packet 220 including the accepted "HTTP + IPP response" and transmits the USB packet 220 to the USB host 150. As illustrated in FIG. 4, the USB packet 220 includes, for example, the "HTTP + IPP response" including an HTTP response and an IPP response.

The second web service unit 302 performs HTTP processing for the USB packet 220 transmitted and received by the USB communication unit 301. For example, the second web service unit 302 extracts the IPP request from the "HTTP + IPP request" accepted from the USB communication unit 301 and notifies the determining unit 303 of the IPP request. In addition, the second web service unit 302 adds the HTTP header 201 to the IPP response accepted from, for example, the second communication unit 305 to create the "HTTP + IPP response" and notifies the USB communication unit 301 of the "HTTP + IPP response".

Note that the USB communication unit 301 and the second web service unit 302 are an example of a receiving unit 300 that performs a reception process of receiving request information regarding a certain process via a serial bus interface (the USB I/F 113).

The responding unit 304 performs a responding process of creating and returning an IPP response (response information) to any of one or more predetermined IP requests among IPP requests (request information) received by the receiving unit 300.

IPP requests include, for example, requests for processes which the main system 120 alone is able to perform, such as a printing request for requesting printing of print data. IPP requests also include, for example, processing requests to which the subsystem 110 is also able to respond, such as a model name acquisition request, a state information acquisition request, and an option information acquisition request. The responding unit 304 creates an IPP response to an IPP request to which the subsystem 110 is also able to respond, and notifies the second web service unit 302 of the created IPP response via the second communication unit 305, for example. Alternatively, the responding unit 304 may notify the second web service unit 302 of the created IPP response without via the second communication unit 305.

When the main system 120 is in the power-saving state, the determining unit 303 determines whether request information received by the receiving unit 300 (the IPP request which the determining unit 303 is notified of by the second web service unit 302) is request information to which the responding unit 304 is able to respond.

If the request information (IPP request) received by the receiving unit 300 is request information to which the responding unit 304 is able to respond, the determining unit 303 transfers the request information (IPP request) to the responding unit 304 (notifies the responding unit 304 of the request information (IPP request)). If the request information received by the receiving unit 300 is not request information to which the responding unit 304 is able to respond, the determining unit 303 uses the state control unit 306 to cause the main system 120 to return to the normal state from the power-saving state. The determining unit 303 also transfers (transmits) the request information (IPP request) received from the receiving unit 300, to the main system 120 via the second communication unit 305.

The second communication unit 305 communicates with the main system 120 via the communication channel 101. For example, the second communication unit 305 receives an IPP response transmitted from the main system 120 and transfers the IPP response to the second web service unit 302. The second communication unit 305 transmits, to the main system 120, an IPP request which the second communication unit 305 is notified of by the determining unit 303.

The second communication unit 305 transfers, to the second web service unit 302, an IPP response which the second communication unit 305 is notified of by the responding unit 304.

The state control unit 306 performs a state control process of managing the state of the main system 120. For example, the state control unit 306 stores and manages, in the subsystem memory 112 or the like, state information indicating whether the main system 120 is in the power-saving state or the normal state.

In response to a normal state return request received from the determining unit 303 in the power-saving state, the state control unit 306 controls the signal output circuit 116 illustrated FIG. 1 to output the return request signal 102 to the main system 120. In this manner, the state control unit 306 causes the main system 120 to return to the normal state from the power-saving state in the case where the IPP request (request information) received by the receiving unit 300 in the power-saving state is not any of the one or more IPP requests to which the responding unit 304 is able to respond.

On the other hand, the state control unit 306 keeps the main system 120 in the power-saving state in the case where the IPP request (request information) received by the receiving unit 300 in the power-saving state is any of the one or more IPP requests to which the responding unit 304 is able to respond.

### <Process Flows>

Process flows of a power-saving control method according to the first embodiment will be described next.

### (Process in Normal State)

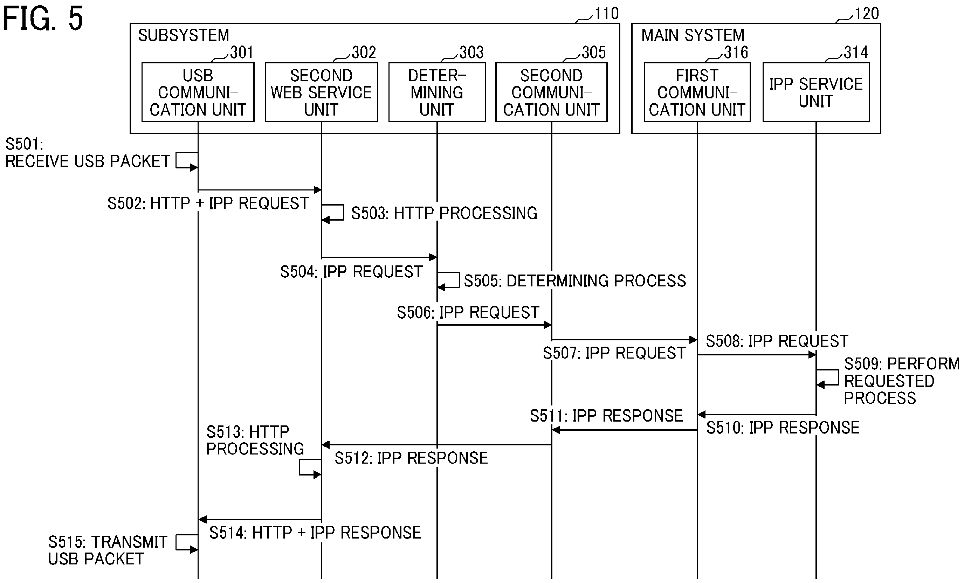

FIG. 5 is a sequence diagram illustrating an example of a process performed in the normal state in accordance with the first embodiment. This process is an example of a process performed in response to the subsystem 110 receiving the USB packet 220 from the USB host 150 when the main system 120 is in the normal state.

In step S501, the USB communication unit 301 of the subsystem 110 receives the USB packet 220 including the "HTTP + IPP request" as illustrated in FIG. 4, for example. In response to the receipt, processing of step S502 and subsequent steps is performed.

In step S502, the USB communication unit 301 notifies the second web service unit 302 of the "HTTP + IPP request" included in the received USB packet 220.

In step S503, the second web service unit 302 performs HTTP processing on the "HTTP + IPP request" accepted from the USB communication unit 301 to acquire the IPP request. In step S504, the second web service unit 302 notifies the determining unit 303 of the acquired IPP request.

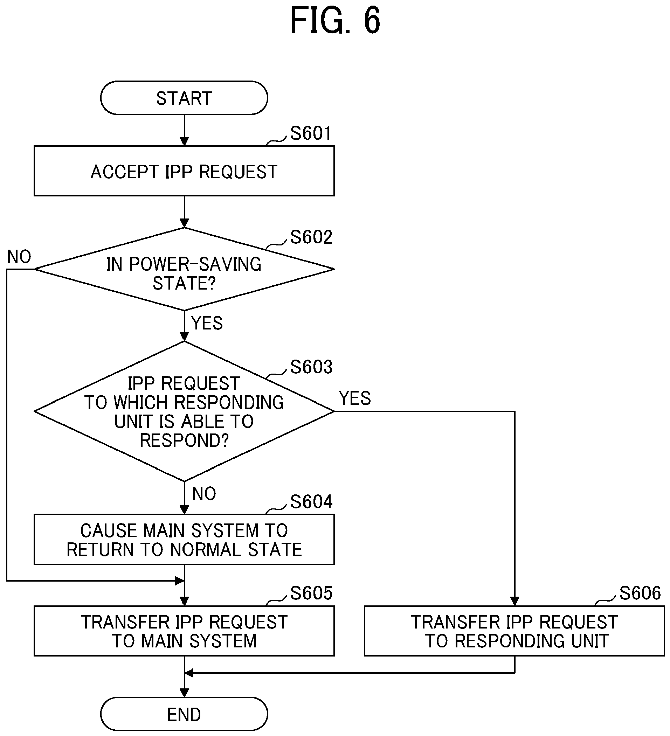

In response to acceptance of the IPP request from the second web service unit 302, the determining unit 303 performs, for example, a determining process illustrated in FIG. 6 in step S505.

FIG. 6 is a flowchart illustrating an example of the determining process performed in accordance with the first embodiment.

In step S601, the determining unit 303 accepts the IPP request. In response to the acceptance, processing of step S602 and subsequent steps is performed.

In step S602, the determining unit 303 determines whether the main system 120 is in the power-saving state. For example, the determining unit 303 refers to the state information that is stored in the subsystem memory 112 or the like and managed by the state control unit 306 to determine whether the main system 120 is in the power-saving state or the normal state.

If the main system 120 is not in the power-saving state, the determining unit 303 causes the process to proceed to step S605. The determining unit 303 transfers the accepted IPP request to the main system 120 via the second communication unit 305. If the main system 120 is in the power-saving state, the determining unit 303 causes the process to proceed to step S603.

In step S603, the determining unit 303 determines whether the accepted IPP request is an IPP request to which the responding unit 304 is able to respond. For example, the determining unit 303 may store in advance a list of IPP requests to which the responding unit 304 is able to respond in the subsystem memory 112 or the like. With reference to this list, the determining unit 303 may determine whether the accepted IPP request is an IPP request to which the responding unit 304 is able to respond.

If the accepted IPP request is not an IPP request to which the responding unit 304 is able to respond, the determining unit 303 causes the process to proceed to step S604. If the accepted IPP request is an IPP request to which the responding unit 304 is able to respond, the determining unit 303 causes the process to proceed to step S606.

In step S604, the determining unit 303 causes the main system 120 to return to the normal state from the power-saving state. For example, the determining unit 303 notifies the state control unit 306 of a return request for requesting returning to the normal state.

In step S605, the determining unit 303 transfers (transmits) the accepted IPP request to the main system 120 via the second communication unit 305. For example, the determining unit 303 notifies the second communication unit 305 of the accepted IPP request. Thus, the second communication unit 305 transmits the IPP request accepted from the determining unit 303 to the main system 120, in response to the main system 120 becoming active and ready for communication.

In response to the process proceeding from step S603 to step S606, the determining unit 303 transfers the accepted IPP request to the responding unit 304 (notifies the responding unit 304 of the accepted IPP request).

Now referring back to FIG. 5, description of the sequence diagram is continued. In step S505 of FIG. 5, as a result of the determining process described in FIG. 6, the determining unit 303 determines that the accepted IPP request is to be transmitted to the main system 120. Thus, the determining unit 303 transfers the accepted IPP request to the second communication unit 305 in step S506. The second communication unit 305 then transfers the IPP request to the main system 120 in step S507.

In step S508, the first communication unit 316 of the main system 120 notifies the IPP service unit 314 of the IPP request received from the subsystem 110.

In step S509, the IPP service unit 314 performs a requested process indicated by the accepted IPP request. In step S510, the IPP service unit 314 transmits an IPP response including the processing result to the first communication unit 316. In step S511, the first communication unit 316 transmits the IPP response to the subsystem 110. For example, if the IPP request is a printing request for requesting printing of print data, the IPP service unit 314 uses the image forming unit 315 to perform printing based on the print data. The IPP service unit 314 then transmits an IPP response including a completion notification indicating completion of printing to the subsystem 110.

In step S512, the second communication unit 305 notifies the second web service unit 302 of the IPP response received from the main system 120.

In step S513, the second web service unit 302 performs HTTP processing on the IPP response accepted from the second communication unit 305 and creates, for example, an "HTTP + IPP response" illustrated in FIG. 4. In step S514, the second web service unit 302 notifies the USB communication unit 301 of the created "HTTP + IPP response".

In step S515, the USB communication unit 301 transmits, to the USB host 150, the USB packet 220 including the "HTTP + IPP response" accepted from the second web service unit 302.

### (Power-Saving-State Transition Process and Return Process)

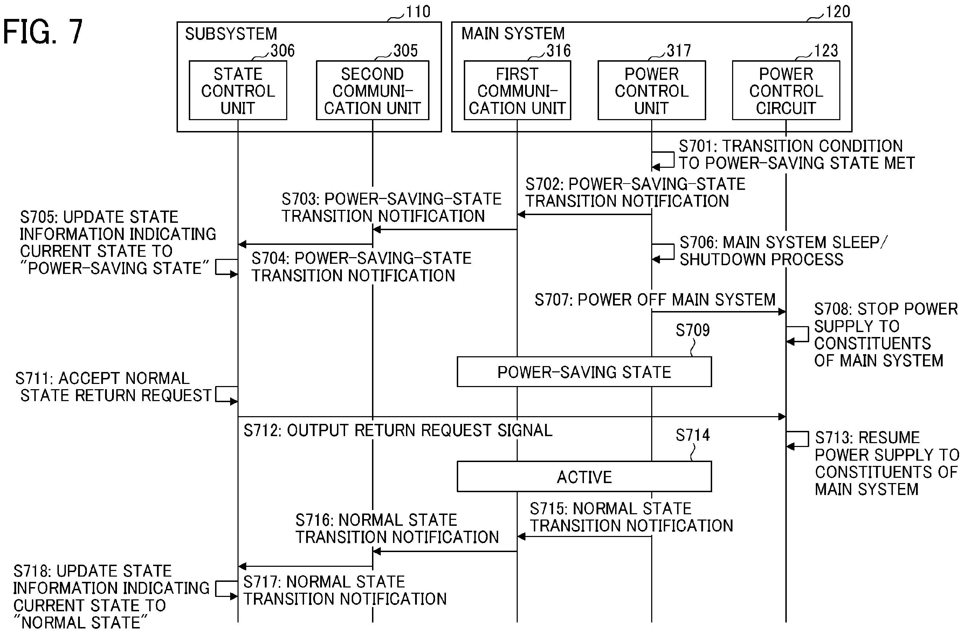

FIG. 7 is a sequence diagram illustrating examples of a transition process and a return process performed in accordance with the first embodiment. This figure illustrates examples of a transition process in which the main system 120 transitions to the power-saving state and a return process in which the main system 120 returns to the normal state from the power-saving state.

In step S701, the power control unit 317 of the main system 120 determines that the previously set transition condition to the power-saving state is met. In response to the determination, the power-saving-state transition process is performed as in steps S702 to S708. Examples of the transition condition to the power-saving state include an elapse of a certain time period from the last execution of a process by the main system 120 or an elapse of a certain time period from the last acceptance of an operation by the main system 120.

In step S702, the power control unit 317 of the main system 120 transmits a power-saving-state transition notification to the first communication unit 316. In step S703, the first communication unit 316 transmits the power-saving-state transition notification to the subsystem 110.

In step S704, the state control unit 306 of the subsystem 110 receives the power-saving-state transition notification via the second communication unit 305. In step S705, the state control unit 306 updates the state information (such as a state flag) indicating the state of the main system 120 to the "power-saving state".

In parallel to the processing of steps S702 and S705, the power control unit 317 of the main system 120 performs a process of causing the main system 120 to sleep or shut down in step S706.

In step S707, the power control unit 317 controls the power control circuit 123 of the main system 120 to stop power supply to the main system 120. In step S708, the power control circuit 123 stops power supply to the constituents of the main system 120. Consequently, the main system 120 enters the power-saving state in step S709. Note that power supply to the power control circuit 123 is continued even in the power-saving state.

For example, in step S711, the state control unit 306 of the subsystem 110 accepts a normal state return request from the determining unit 303 or the like in this power-saving state. In response to the acceptance, a return process from the power-saving state is performed as in steps S712 to S718.

In step S712, the state control unit 306 controls the signal output circuit 116 to output the return request signal 102 to the power control circuit 123 of the main system 120.

In step S713, in response to acceptance of the return request signal 102, the power control circuit 123 resumes power supply to the constituents of the main system 120. Consequently, the main system 120 is activated in step S714.

In step S715, the power control unit 317 of the main system 120 notifies the first communication unit 316 of the normal state transition notification indicating transition of the main system 120 to the normal state. In step S716, the first communication unit 316 notifies the subsystem 110 of the normal state transition notification.

In step S717, the state control unit 306 of the subsystem 110 receives the normal state transition notification via the second communication unit 305. In response to the receipt, the state control unit 306 updates the state information (such as the state flag) indicating the current state of the main system 120 to the "normal state" in step S718.

### (First Process in Power-Saving State)

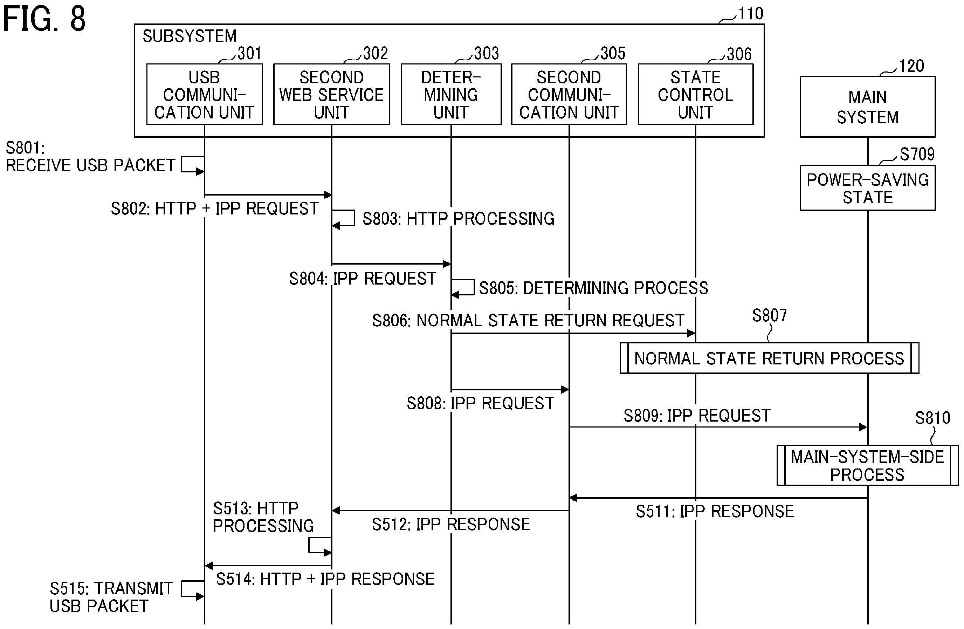

FIG. 8 is a sequence diagram illustrating an example of a process performed in a power-saving state in accordance with the first embodiment. This process is an example of a process performed by the power-saving control apparatus 100 in response to the subsystem 110 receiving an IPP request to which the responding unit 304 is unable to respond from the USB host 150 when the main system 120 is in the power-saving state.

It is assumed that the main system 120 is in the power-saving state as a result of, for example, the processing of steps S701 to S709 of FIG. 7 when the process illustrated in FIG. 8 is started. In the process illustrated in FIG. 8, processing of steps S511 to S515 is substantially the same as the processing performed in the normal state, which is described in FIG. 5. Thus, in this example, differences from the processing performed in the normal state will be mainly described.

In step S801, the USB communication unit 301 of the subsystem 110 receives the USB packet 220 from the USB host 150. In response to the receipt, processing of step S802 and subsequent steps is performed. It is assumed in this example that the USB packet 220 received by the USB communication unit 301 includes, for example, an IPP request (such as a printing request of print data, for example) to which the responding unit 304 of the subsystem 110 is unable to respond.

In step S802, the USB communication unit 301 notifies the second web service unit 302 of an "HTTP + IPP request" included in the received USB packet 220.

In step S803, the second web service unit 302 performs HTTP processing on the "HTTP + IPP request" accepted from the USB communication unit 301 to acquire an IPP request. In step S804, the second web service unit 302 notifies the determining unit 303 of the acquired IPP request.

In response to acceptance of the IPP request from the second web service unit 302, the determining unit 303 performs, for example, the determining process illustrated in FIG. 6 in step S805. In this example, the main system 120 is in the power-saving state and the acquired IPP request is an IPP request to which the responding unit 304 is unable to respond. Thus, the determining unit 303 performs the processing of steps S604 and S605 illustrated in FIG. 6.

For example, in step S806 of FIG. 8, the determining unit 303 notifies the state control unit 306 of the normal state return request. In step S807, for example, the normal state return process is performed as in steps S711 to S718 of FIG. 7.

In step S808, the determining unit 303 notifies the second communication unit 305 of the IPP request accepted from the second web service unit 302. Thus, in response to communication with the main system 120 being enabled, the second communication unit 305 transmits the accepted IPP request to the main system 120 in step S809, for example.

In step S810, the main system 120 performs the main-system-side process as in steps S508 to S510 illustrated in FIG. 5, for example.

As described above, when the USB packet 220 received in the power-saving state includes an IPP request to which the responding unit 304 is unable to respond, the subsystem 110 causes the main system 120 to transition to the normal state and process the IPP request.

### (Second Process in Power-Saving State)

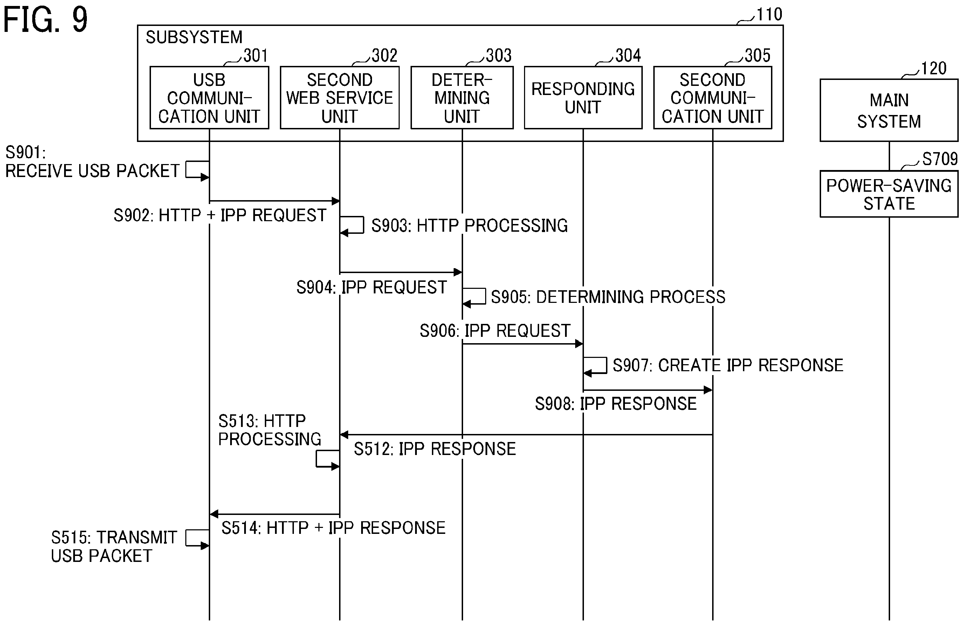

FIG. 9 is a sequence diagram illustrating an example of the process performed in the power-saving state in accordance with the first embodiment. This process is an example of a process performed by the power-saving control apparatus 100 in response to the subsystem 110 receiving an IPP request to which the responding unit 304 is able to respond from the USB host 150 when the main system 120 is in the power-saving state.

It is assumed that the main system 120 is in the power-saving state as a result of, for example, the processing of steps S701 to S709 of FIG. 7 when the process illustrated in FIG. 9 is started. In the process illustrated in FIG. 9, processing of steps S512 to S515 is substantially the same as the processing performed in the normal state, which is described in FIG. 5. Thus, in this example, differences from the processing performed in the normal state will be mainly described.

In step S901, the USB communication unit 301 of the subsystem 110 receives the USB packet 220 from the USB host 150. In response to the receipt, processing of step S902 and subsequent steps is performed. It is assumed in this example that the USB packet 220 received by the USB communication unit 301 includes, for example, an IPP request (such as a model name acquisition request, a state information acquisition request, or an option information acquisition request, for example) to which the responding unit 304 of the subsystem 110 is able to respond.

In step S902, the USB communication unit 301 notifies the second web service unit 302 of an "HTTP + IPP request" included in the received USB packet 220.

In step S903, the second web service unit 302 performs HTTP processing on the "HTTP + IPP request" accepted from the USB communication unit 301 to acquire an IPP request. In step S904, the second web service unit 302 notifies the determining unit 303 of the acquired IPP request.

In response to acceptance of the IPP request from the second web service unit 302, the determining unit 303 performs, for example, the determining process illustrated in FIG. 6 in step S905. In this example, the main system 120 is in the power-saving state and the acquired IPP request is an IPP request to which the responding unit 304 is able to respond. Thus, the determining unit 303 performs the processing of step S606 of FIG. 6. For example, in step S906 of FIG. 9, the determining unit 303 notifies the responding unit 304 of the accepted IPP request.

In step S907, the responding unit 304 creates an IPP response corresponding to the IPP request accepted from the determining unit 303. For example, if the IPP request is a model name acquisition request for acquiring the model name of the power-saving control apparatus 100, the responding unit 304 reads out the model name previously stored in the subsystem memory 112 of the subsystem 110 and creates an IPP response including the readout model name. For example, if the IPP request is the state information acquisition request for acquiring the state information indicating the state of the power-saving control apparatus 100, the responding unit 304 acquires the state information from the state control unit 306 and creates an IPP response including the acquired state information.

In step S908, the responding unit 304 notifies the second communication unit 305 of the created IPP response. In response to the notification, the processing of steps S512 to S515 is performed.

As described above, when the USB packet 220 received in the power-saving state includes an IPP request to which the responding unit 304 is able to respond, the subsystem 110 is able to process the IPP request with the main system 120 kept in the normal state.

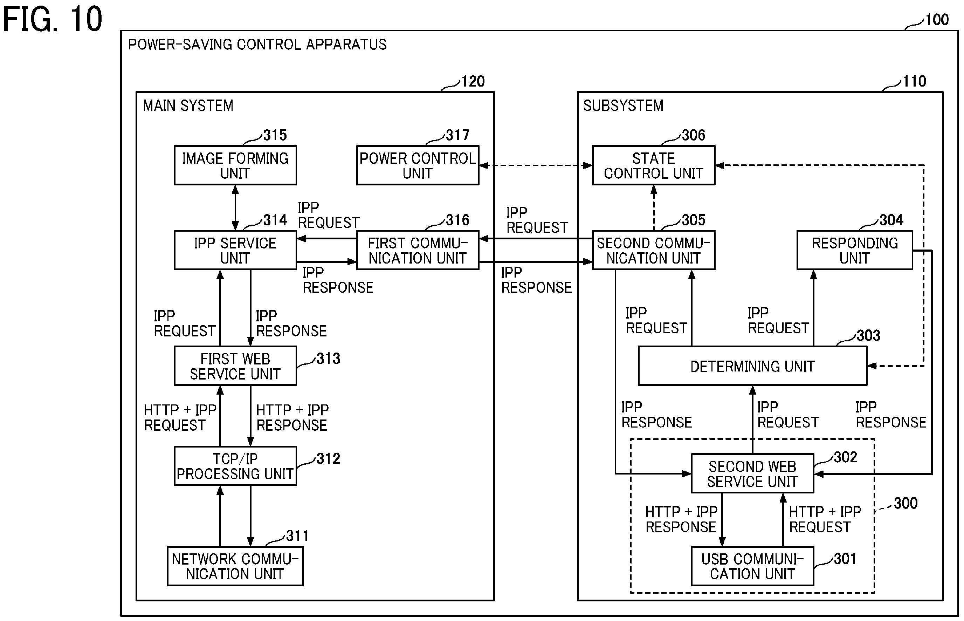

The process illustrated in FIG. 9 is merely an example. For example, the power-saving control apparatus 100 may have a functional configuration illustrated in FIG. 10. In the example illustrated in FIG. 10, the second web service unit 302 of the subsystem 110 is capable of accepting an IPP response from the responding unit 304.

In this case, the responding unit 304 is capable of notifying the second web service unit 302, instead of the second communication unit 305, of the created IPP response in step S908 of FIG. 9, for example.

As described above, according to the present embodiment, the power-saving control apparatus 100 in which the subsystem 110 controls the power state of the main system 120 successfully suppresses an increase in power consumption that occurs when data is received from a serial bus interface in the power-saving state.

### [Second Embodiment]

### <Functional Configuration>

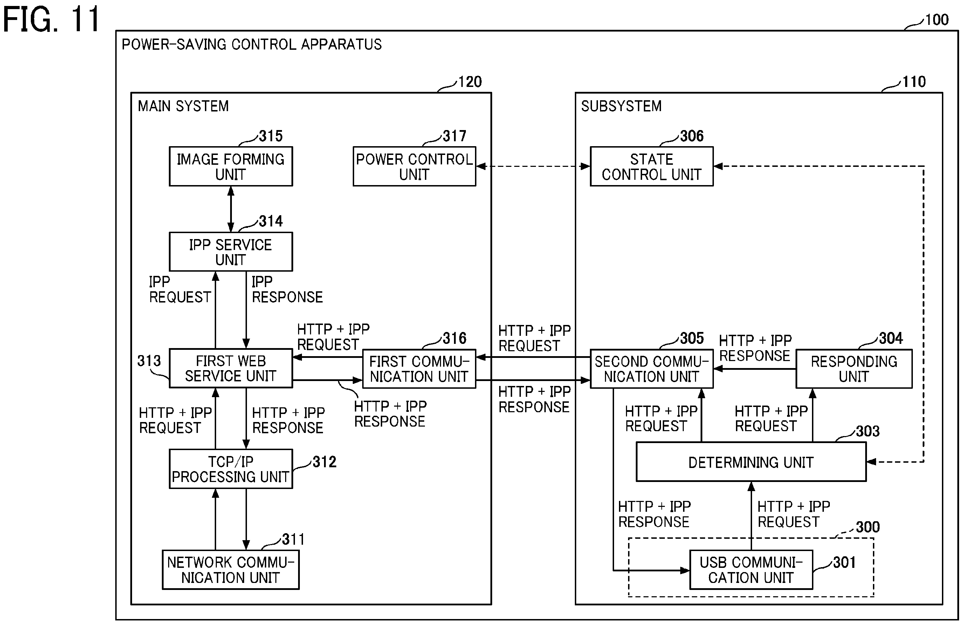

FIG. 11 is a block diagram illustrating an example of a functional configuration of a power-saving control apparatus according to a second embodiment.

### (Functional Configuration of Main System)

Similarly to the main system 120 according to the first embodiment described with reference to FIG. 3, a main system 120 according to the second embodiment includes, for example, a network communication unit 311, a TCP/IP processing unit 312, a first web service unit 313, an IPP service unit 314, an image forming unit 315, a first communication unit 316, and a power control unit 317. Note that a destination to which the first communication unit 316 is coupled is changed from the IPP service unit 314 to the first web service unit 313.

With the configuration described above, the first web service unit 313 is capable of performing HTTP processing on an "HTTP + IPP request" transmitted from the subsystem 110 in addition to an "HTTP + IPP request" accepted from the TCP/IP processing unit 312.

The functional configuration of the main system 120 other than the configuration described above may be substantially the same as the functional configuration of the main system 120 according to the first embodiment described with reference to FIG. 3.

### (Functional Configuration of Subsystem)

As illustrated in FIG. 11, a subsystem 110 according to the second embodiment has a configuration in which the second web service unit 302 is omitted from among the functional units of the subsystem 110 according to the first embodiment described with reference to FIG. 3.

The USB communication unit 301 is implemented by, for example, a program such as a USB driver executed by the sub-CPU 111. The USB communication unit 301 uses the USB I/F 113 to transmit and receive the USB packet 220 illustrated in FIG. 2B to and from the USB host 150. For example, in response to receipt of the USB packet 220 transmitted from the USB host 150, the USB communication unit 301 notifies the determining unit 303 of an "HTTP + IPP request" included in the received USB packet 220. In response to acceptance of an "HTTP + IPP response" from the second communication unit 305, the USB communication unit 301 creates the USB packet 220 including the accepted "HTTP + IPP response" and transmits the USB packet 220 to the USB host 150, for example.

Note that the USB communication unit 301 is another example of the receiving unit 300 that receives request information (an IPP request) regarding a certain process (a printing process) via a serial bus interface (the USB I/F 113).

When the main system 120 is in the power-saving state, the determining unit 303 determines whether the request information received by the receiving unit 300 (the "HTTP + IPP request" which the determining unit 303 is notified of by the USB communication unit 301) is request information to which the responding unit 304 is able to respond.

If the request information received by the receiving unit 300 is request information to which the responding unit 304 is able to respond, the determining unit 303 transfers the request information (the "HTTP + IPP request") to the responding unit 304 (notifies the responding unit 304 of the request information (the "HTTP + IPP request")). If the request information received by the receiving unit 300 is not request information to which the responding unit 304 is able to respond, the determining unit 303 uses the state control unit 306 to cause the main system 120 to return to the normal state from the power-saving state. The determining unit 303 also transfers (transmits) the request information (the "HTTP + IPP request") received from the receiving unit 300, to the main system 120 via the second communication unit 305.

The responding unit 304 creates and returns response information (an "HTTP + IPP response") corresponding to any of one or more pieces of request information among pieces of request information ("HTTP + IPP requests") received by the receiving unit 300.

"HTTP + IPP requests" include, for example, requests for processes which the main system 120 alone is able to perform, such as a printing request for requesting printing of print data. "HTTP + IPP requests" also include, for example, processing requests to which the subsystem 110 is also able to respond, such as a model name acquisition request, a state information acquisition request, and an option information acquisition request. The responding unit 304 creates an "HTTP + IPP response" corresponding to the "HTTP + IPP request" to which the subsystem 110 is also able to respond, and notifies the USB communication unit 301 of the created "HTTP + IPP response" via the second communication unit 305. Alternatively, the responding unit 304 may notify the USB communication unit 301 of the created "HTTP + IPP response" without via the second communication unit 305.

The second communication unit 305 communicates with the main system 120 via the communication channel 101. For example, the second communication unit 305 receives the "HTTP + IPP response" transmitted from the main system 120 and transfers the "HTTP + IPP response" to the USB communication unit 301. The second communication unit 305 transmits, to the main system 120, the "HTTP + IPP request" which the second communication unit 305 is notified of by the determining unit 303. The second communication unit 305 transfers, to the USB communication unit 301, the "HTTP + IPP response" which the second communication unit 305 is notified of by the responding unit 304.

As in the first embodiment, the state control unit 306 manages the state of the main system 120. For example, when the main system 120 is in the power-saving state, the state control unit 306 keeps the main system 120 in the power-saving state if request information (an "HTTP + IPP request") received by the receiving unit 300 is any of the one or more pieces of request information to which the responding unit 304 is able to respond.

When the main system 120 is in the power-saving state, the state control unit 306 causes the main system 120 to return to the normal state if the request information received by the receiving unit 300 is not any of the one or more pieces of request information to which the responding unit 304 is able to respond.

### <Process Flows>

Process flows of a power-saving control method according to the second embodiment will be described next.

### (Process in Normal State)

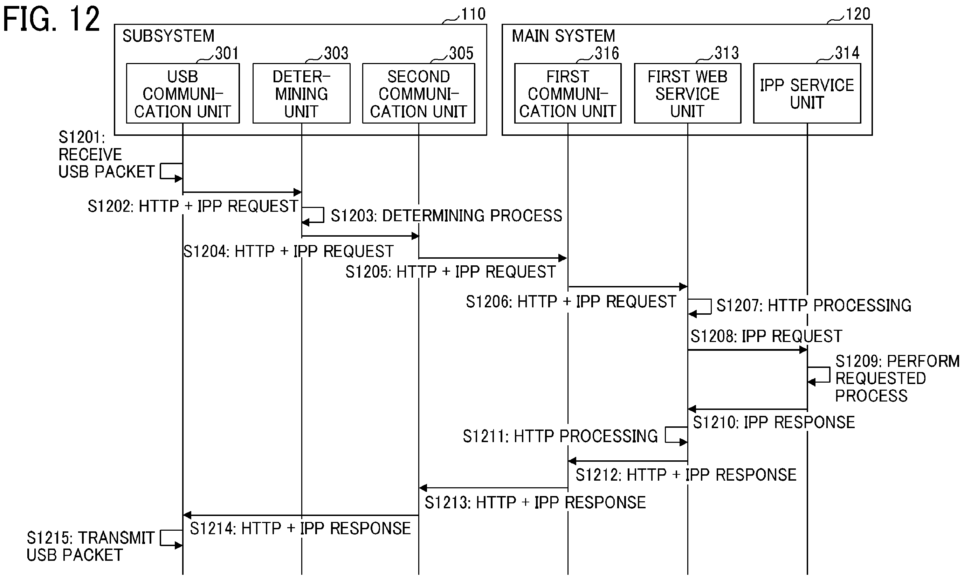

FIG. 12 is a sequence diagram illustrating an example of a process performed in the normal state in accordance with the second embodiment. This process is an example of a process performed in response to the subsystem 110 receiving the USB packet 220 from the USB host 150 when the main system 120 is in the normal state.

In step S1201, the USB communication unit 301 of the subsystem 110 receives the USB packet 220 including an "HTTP + IPP request" illustrated in FIG. 4, for example. In response to the receipt, processing of step S1202 and subsequent steps is performed.

In step S1202, the USB communication unit 301 notifies the determining unit 303 of the "HTTP + IPP request" included in the received USB packet 220.

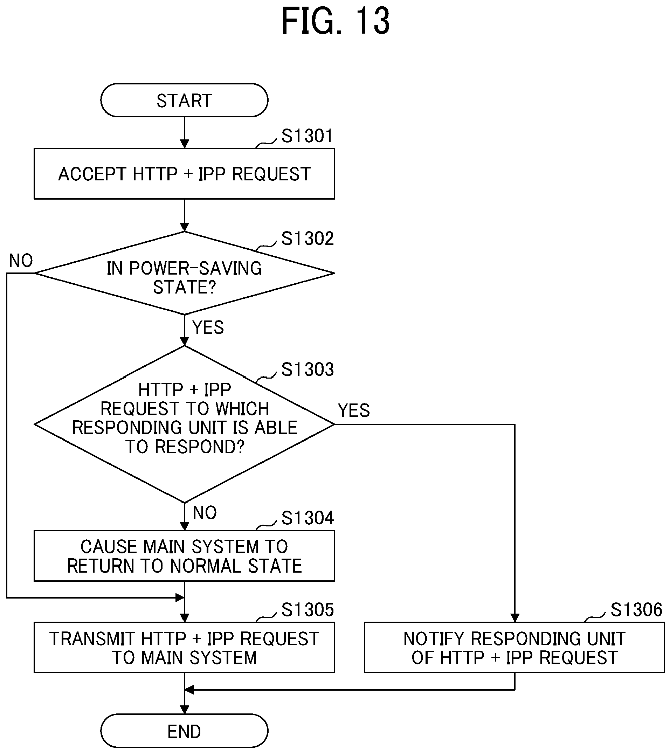

In response to acceptance of the "HTTP + IPP request" from the USB communication unit 301, the determining unit 303 performs, for example, a determining process illustrated in FIG. 13 in step S1203.

FIG. 13 is a flowchart illustrating an example of the determining process performed in accordance with the second embodiment.

In step S1301, the determining unit 303 accepts the "HTTP + IPP request". In response to the acceptance, processing of step S1302 and subsequent steps is performed.

In step S1302, the determining unit 303 determines whether the main system 120 is in the power-saving state. For example, the determining unit 303 refers to the state information that is stored in the subsystem memory 112 or the like and managed by the state control unit 306 to determine whether the main system 120 is in the power-saving state or the normal state.

If the main system 120 is not in the power-saving state, the determining unit 303 causes the process to proceed to step S1305. The determining unit 303 transfers (transmits) the accepted "HTTP + IPP request" to the main system 120 via the second communication unit 305. If the main system 120 is in the power-saving state, the determining unit 303 causes the process to proceed to step S1303.

In step S1303, the determining unit 303 determines whether the accepted "HTTP + IPP request" is an "HTTP + IPP request" to which the responding unit 304 is able to respond. For example, the determining unit 303 may store in advance a list of "HTTP + IPP requests" to which the responding unit 304 is able to respond in the subsystem memory 112 or the like. With reference to this list, the determining unit 303 may determine whether the accepted "HTTP + IPP request" is an "HTTP + IPP request" to which the responding unit 304 is able to respond.

If the accepted "HTTP + IPP request" is not an "HTTP + IPP request" to which the responding unit 304 is able to respond, the determining unit 303 causes the process to proceed to step S1304. If the accepted "HTTP + IPP request" is an "HTTP + IPP request" to which the responding unit 304 is able to respond, the determining unit 303 causes the process to proceed to step S1306.

In step S1304, the determining unit 303 causes the main system 120 to return to the normal state from the power-saving state. For example, the determining unit 303 notifies the state control unit 306 of a return request for requesting returning to the normal state.

In step S1305, the determining unit 303 transfers (transmits) the accepted "HTTP + IPP request" to the main system 120 via the second communication unit 305. For example, the determining unit 303 notifies the second communication unit 305 of the accepted "HTTP + IPP request". Thus, the second communication unit 305 transmits the "HTTP + IPP request" accepted from the determining unit 303 to the main system 120, in response to the main system 120 becoming active and ready for communication.

If the process proceeds from step S1303 to step S1306, the determining unit 303 transfers the accepted "HTTP + IPP request" to the responding unit 304" (notifies the responding unit 304 of the accepted "HTTP + IPP request").

Now referring back to FIG. 12, description of the sequence diagram is continued. In step S1203 of FIG. 12, as a result of the determining process described in FIG. 13, the determining unit 303 determines that the accepted "HTTP + IPP request" is to be transmitted to the main system 120. Thus, in step S1204, the determining unit 303 transmits the accepted "HTTP + IPP request" to the second communication unit 305. In step S1205, the second communication unit 305 transmits the "HTTP + IPP request" to the main system 120.

In step S1206, the first communication unit 316 of the main system 120 notifies the first web service unit 313 of the "HTTP + IPP request" received from the subsystem 110.

In step S1207, the first web service unit 313 performs HTTP processing on the accepted "HTTP + IPP request" to acquire the IPP request. In step S1208, the first web service unit 313 notifies the IPP service unit 314 of the acquired IPP request.

In step S1209, the IPP service unit 314 performs an IPP service corresponding to the accepted IPP request. In step S1210, the IPP service unit 314 notifies the first web service unit 313 of an IPP response indicating the processing result.

In step S1211, the first web service unit 313 performs HTTP processing on the accepted "IPP response" to create an "HTTP + IPP response". In step S1212, the first web service unit 313 transmits the created "HTTP + IPP response" to the first communication unit 316. In step S1213, the first communication unit 316 transmits the "HTTP + IPP response" to the subsystem 110.

In step S1214, the second communication unit 305 notifies the USB communication unit 301 of the "HTTP + IPP response" received from the main system 120.

In step S1215, the USB communication unit 301 transmits, to the USB host 150, the USB packet 220 including the "HTTP + IPP response" accepted from the second communication unit 305.

### (First Process in Power-Saving State)

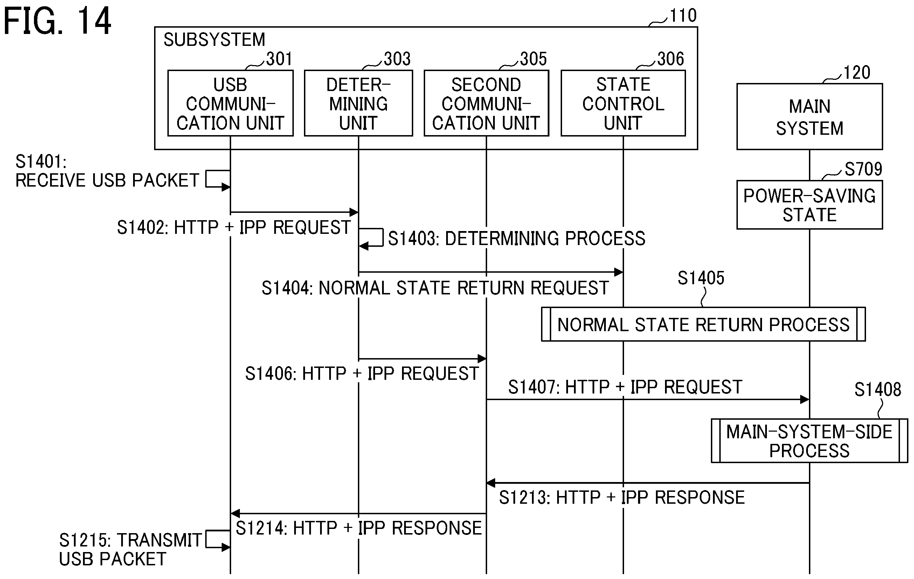

FIG. 14 is a sequence diagram illustrating an example of a process performed in the power-saving state in accordance with the second embodiment. This process is an example of a process performed by the power-saving control apparatus 100 in response to the subsystem 110 receiving an IPP request to which the responding unit 304 is unable to respond from the USB host 150 when the main system 120 is in the power-saving state.

It is assumed that the main system 120 is in the power-saving state as a result of, for example, the processing of steps S701 to S709 of FIG. 7 when the process illustrated in FIG. 14 is started. In the process illustrated in FIG. 14, processing of steps S1213 to S1215 is substantially the same as the processing described in FIG. 12. Thus, in this example, differences from the processing described in FIG. 12 will be mainly described.

In step S1401, the USB communication unit 301 of the subsystem 110 receives the USB packet 220 from the USB host 150. In response to the receipt, processing of step S1402 and subsequent steps is performed. It is assumed in this example that the USB packet 220 received by the USB communication unit 301 includes, for example, an IPP request (such as a printing request of print data, for example) to which the responding unit 304 of the subsystem 110 is unable to respond.

In step S1402, the USB communication unit 301 notifies the determining unit 303 of an "HTTP + IPP request" included in the received USB packet 220.

In response to acceptance of the "HTTP + IPP request" from the USB communication unit 301, the determining unit 303 performs, for example, the determining process illustrated in FIG. 13 in step S1403. In this example, the main system 120 is in the power-saving state and the acquired IPP request is an IPP request to which the responding unit 304 is unable to respond. Thus, the determining unit 303 performs the processing of steps S1304 and S1305 of FIG. 13. For example, in step S1404 of FIG. 14, the determining unit 303 notifies the state control unit 306 of the normal state return request. In step S1405, for example, the normal state return process is performed as in steps S711 to S718 of FIG. 7.

In step S1406, the determining unit 303 notifies the second communication unit 305 of the "HTTP + IPP request" accepted from the USB communication unit 301. Thus, in response to communication with the main system 120 being enabled, the second communication unit 305 transmits the accepted "HTTP + IPP request" to the main system 120 in step S1407, for example.

In step S1408, the main system 120 performs the main-system-side process as in steps S1206 to S1212 illustrated in FIG. 12, for example.

As described above, when the USB packet 220 received in the power-saving state includes an IPP request to which the responding unit 304 is unable to respond, the subsystem 110 causes the main system 120 to transition to the normal state and process the IPP request.

### (Second Process in Power-Saving State)

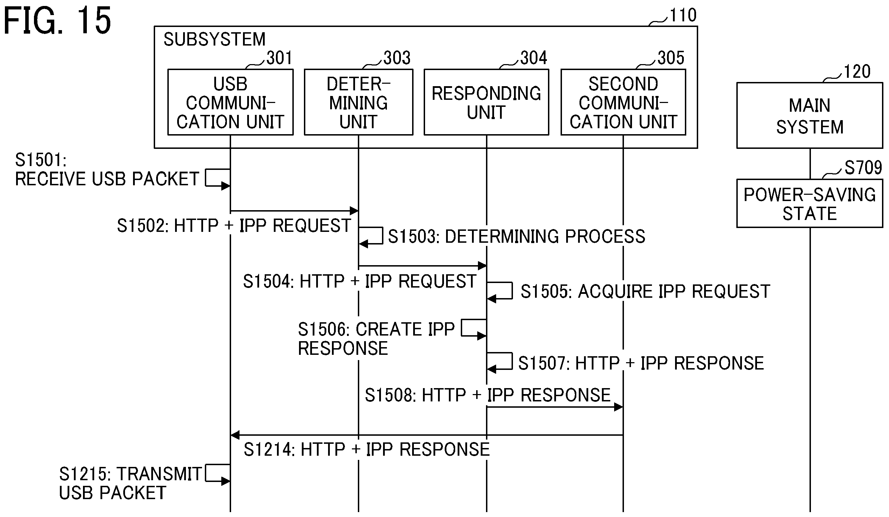

FIG. 15 is a sequence diagram illustrating an example of the process performed in the power-saving state in accordance with the second embodiment. This process is an example of a process performed by the power-saving control apparatus 100 in response to the subsystem 110 receiving an IPP request to which the responding unit 304 is able to respond from the USB host 150 when the main system 120 is in the power-saving state.

It is assumed that the main system 120 is in the power-saving state as a result of, for example, the processing of steps S701 to S709 of FIG. 7 when the process illustrated in FIG. 15 is started. In the process illustrated in FIG. 15, processing of steps S1214 and S1215 is substantially the same as the processing performed in the normal state, which is described in FIG. 12. Thus, in this example, differences from the processing performed in the normal state will be mainly described.

In step S1501, the USB communication unit 301 of the subsystem 110 receives the USB packet 220 from the USB host 150. In response to the receipt, processing of step S1502 and subsequent steps is performed. It is assumed in this example that the USB packet 220 received by the USB communication unit 301 includes, for example, an IPP request to which the responding unit 304 of the subsystem 110 is able to respond.

In step S1502, the USB communication unit 301 notifies the determining unit 303 of an "HTTP + IPP request" included in the received USB packet 220.

In response to acceptance of the "HTTP + IPP request" from the USB communication unit 301, the determining unit 303 performs, for example, the determining process illustrated in FIG. 13 in step S1503. In this example, the main system 120 is in the power-saving state and the accepted "HTTP + IPP request" is an "HTTP + IPP request" to which the responding unit 304 is able to respond. Thus, the determining unit 303 performs the processing of step S1306 of FIG. 13. For example, in step S1504 of FIG. 15, the determining unit 303 transfers the accepted "HTTP + IPP request" to the responding unit 304 (notifies the responding unit 304 of the accepted "HTTP + IPP request").

In step S1505, the responding unit 304 acquires an IPP request from the "HTTP + IPP request", for example illustrated in FIG. 4, accepted from the determining unit 303.

In step S1506, the responding unit 304 creates an IPP response corresponding to the acquired IPP request. For example, if the IPP request is an option information acquisition request for acquiring the option information of the power-saving control apparatus 100, the responding unit 304 reads out the option information previously stored in the subsystem memory 112 of the subsystem 110 and creates an IPP response including the option information.

In step S1507, the responding unit 304 creates an "HTTP + IPP response" that includes the created IPP response as illustrated in FIG. 4, for example.

In step S1508, the responding unit 304 notifies the second communication unit 305 of the created "HTTP + IPP response". In response to the notification, the processing of steps S1214 and S1215 is performed.

As described above, when the USB packet 220 received in the power-saving state includes an IPP request to which the responding unit 304 is able to respond, the subsystem 110 is able to process the IPP request with the main system 120 kept in the normal state.

The process illustrated in FIG. 15 is merely an example. For example, in step S1508 of FIG. 15, the responding unit 304 may notify the USB communication unit 301 of the created "HTTP + IPP response" without via the second communication unit 305.

As described above, the second web service unit 302 illustrated in FIG. 3 may be omitted from the subsystem 110.

### [Third Embodiment]

In the first and second embodiments, the determining unit 303 of the subsystem 110 is implemented by a program executed by the sub-CPU 111. However, this configuration is merely an example, and at least part of the function of the determining unit 303 may be implemented by the filter DMAC 114 illustrated in FIG. 1 or the like.

As described before, the filter DMAC 114 has a filter function of performing filtering on packet data received by the USB I/F 113 or the network I/F 115 to discard unnecessary packet data and a DMAC function. In the third embodiment, an example of a process performed in the case where the filter DMAC 114 performs filtering on packet data received by the USB I/F 113 will be described.

Filters for IPP requests are set in the filter DMAC 114. For example, a filter A is a filter that passes IPP requests for a printing process such as printing of print data. A filter B is a filter that passes IPP requests to which the responding unit 304 is able to respond. The printing process is an example of a certain process. The filter for the printing process is an example of a filter for the certain process.

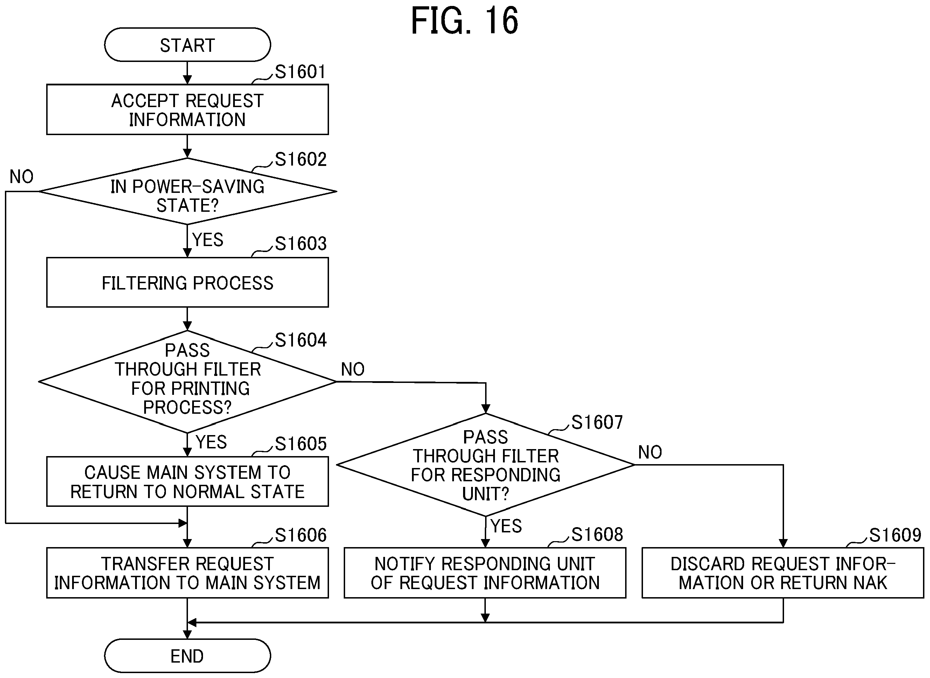

The determining unit 303 uses the filter DMAC 114 to perform a determining process illustrated in FIG. 16, for example.

### <Process Flow>

FIG. 16 is a flowchart illustrating an example of the determining process performed in accordance with the third embodiment.

In step S1601, the filter DMAC 114 accepts request information (an IPP request or an "HTTP + IPP request"). In response to the acceptance, processing of step S1602 and subsequent steps is performed.

In step S1602, the determining unit 303 causes the process to branch depending on whether the main system 120 is in the power-saving state.

If the main system 120 is not in the power-saving state, the determining unit 303 causes the process to proceed to step S1606. The determining unit 303 transfers the request information to the main system 120. The determining unit 303 may make a setting in advance so that the filter DMAC 114 transfers the accepted request information to the main system 120 by DMA if the main system 120 is in the normal state.

If the main system 120 is in the power-saving state, the determining unit 303 causes the process to proceed to step S1603.

In step S1603, the determining unit 303 causes the filter DMAC 114 to perform a filtering process based on the filters A and B described above. The determining unit 303 may make a setting in advance so that the filter DMAC 114 performs the filtering process if the main system 120 is in the power-saving state. As a result, if the request information is request information (an IPP request or an "HTTP + IPP request") for a printing process, the request information passes through the filter A. In addition, if the request information is request information to which the responding unit 304 is able to respond, the request information passes through the filter B.

If the request information passes through the filter A (filter for a printing process) in step S1604, the determining unit 303 causes the process to proceed to step S1605. If the request information does not pass through the filter A, the determining unit 303 causes the process to proceed to step S1607.

In step S1605, the determining unit 303 causes the main system 120 to return to the normal state from the power-saving state. For example, the determining unit 303 notifies the state control unit 306 of a return request for requesting returning to the normal state.

In step S1606, the determining unit 303 uses, for example, the DMA transfer function of the filter DMAC 114 to transfer the accepted request information to the main system 120.

If the request information passes through the filter B (filter for the responding unit) in step S1607, the determining unit 303 causes the process to proceed to step S1608. If the request information does not pass through the filter B, the determining unit 303 causes the process to proceed to step S1609.

In step S1608, the determining unit 303 transfers the accepted request information to the responding unit 304 (notifies the responding unit 304 of the accepted request information).

In step S1609, the determining unit 303 discards the request information. Alternatively, the determining unit 303 may return NAK or the like to the USB host 150.

The processing of step S1609 is merely an example. For example, if the request information does not pass through the filter B (filter for the responding unit) in step S1607 of FIG. 16, the determining unit 303 may perform the processing of steps S1605 and S1606. Alternatively, if the request information does not pass through the filter B (filter for the responding unit) in step S1607 of FIG. 16, the determining unit 303 may further use other filters (filters C, D,...) to cause the process to branch further.

As described above, part of the determining process is performed by hardware (such as the filter DMAC 114), so that the load of the sub-CPU 111 is successfully reduced. Consequently, power consumption of the power-saving control apparatus 100 is successfully reduced further.

As described above, according to each of the embodiments of the present disclosure, the power-saving control apparatus in which the subsystem controls the power state of the main system successfully suppresses an increase in power consumption that occurs when data is received from a serial bus interface in the power-saving state.

In each of the above embodiments, the case where the image processing apparatus includes the functions of the power-saving control apparatus 100 has been described. In other examples, the present disclosure is applicable to various apparatuses that accept request information from the USB host 150 in the power-saving state.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked process apparatuses. The process apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A power-saving control apparatus (100) comprising:
a main system (120) configured to perform one or more processes; and
a subsystem (110) communicable with the main system, the subsystem including:
a receiving unit (300, 301, 302) configured to receive, from the main system (120), one or more pieces of request information regarding the one or more processes via a serial bus interface;
a responding unit (304) configured to create and return one or more pieces of response information corresponding to one or more pieces of predetermined request information among the received one or more pieces of request information; and
a state control unit (306) configured to, when the main system (120) is in a power-saving state, cause the main system (120) to maintain the power-saving state in a case where the received request information is the predetermined request information, the power-saving state being a state in which power consumption is less than power consumption in a normal state in which the main system (120) is ready to perform the one or more processes.

2. The power-saving control apparatus (100) according to Claim 1,
wherein the state control unit (306) is configured to, when the main system (120) is in the power-saving state, cause the main system (120) to return to the normal state in a case where the received request information is not the predetermined request information.

3. The power-saving control apparatus (100) according to Claim 1 or 2,
wherein the subsystem (110) further includes a determining unit (303) configured to determine whether the received request information is the predetermined request information when the main system is in the power-saving state.

4. The power-saving control apparatus (100) according to Claim 3,
wherein the determining unit (303) is configured to, when the main system (120) is in the power-saving state, transfer the received request information to the responding unit (304) in a case where the received request information is the predetermined request information to which the responding unit (304) is able to respond.

5. The power-saving control apparatus (100) according to Claim 3 or 4,
wherein the determining unit (303) is configured to, when the main system (120) is in the power-saving state, transfer the received request information to the main system (120) in a case where the received request information is information other than the predetermined request information to which the responding unit (304) is able to respond.

6. The power-saving control apparatus (100) according to any one of Claims 3 to 5,
wherein when the main system (120) is in the power-saving state, in a case where the received request information is request information for requesting execution of the one or more processes,
the state control unit (306) is configured to cause the main system to return to the normal state, and
the determining unit (303) is configured to transfer the received request information to the main system.

7. The power-saving control apparatus (100) according to any one of Claims 4 to 6,
wherein the predetermined request information to which the responding unit is able to respond includes request information for requesting acquisition of information regarding the one or more processes.

8. The power-saving control apparatus (100) according to any one of Claims 5 to 7,
wherein the information other than the predetermined request information to which the responding unit is able to respond includes request information for requesting execution of the one or more processes.

9. The power-saving control apparatus (100) according to any one of Claims 1 to 8,
wherein the main system (120) includes a first communication unit (316) configured to transmit response information corresponding to the request information to the subsystem, and
wherein the subsystem (110) further includes a second communication unit (305) configured to transmit the request information to the main system.

10. The power-saving control apparatus (100) according to any one of Claims 1 to 9,
wherein the one or more processes include a printing process of performing printing based on print data, and
wherein the request information received by the receiving unit includes a printing service request for requesting a service relating to the printing process.

11. The power-saving control apparatus (100) according to Claim 10,
wherein the responding unit (304) is configured to create a printing service response corresponding to a request for acquiring information regarding the printing process in the printing service request.

12. The power-saving control apparatus (100) according to Claim 10 or 11,
wherein the main system (120) includes an image forming unit (315) configured to perform the printing process in the printing service request.

13. An image processing apparatus comprising:
the power-saving control apparatus (100) according to any one of Claims 1 to 12.

14. A power-saving control method performed by a subsystem (110) of a power-saving control apparatus (100), the power-saving control apparatus (100) including a main system (120) that performs one or more processes, and the subsystem (110) communicable with the main system, the power-saving control method comprising:
receiving (S901 to S903, S1501) one or more pieces of request information regarding the one or more processes via a serial bus interface;
creating and returning (S907 and S908, S1506 to S1508) one or more pieces of response information corresponding to one or more pieces of predetermined request information among the one or more pieces of request information received in the receiving; and
when the main system is in a power-saving state, causing (S709) the main system to maintain the power-saving state in a case where the received request information is the predetermined request information, the power-saving state being a state in which power consumption is less than power consumption in a normal state in which the main system is ready to perform the one or more processes.

15. Carrier means carrying computer readable code for controlling a computer system to carry out the power-saving control method of claim 14.
